# EUROPÄISCHE PATENTSCHRIFT

(11) **EP 2 607 761 B1**
(45) Veröffentlichungstag und Bekanntmachung des Hinweises auf die Patenterteilung: **06.04.2016**
(21) Anmeldenummer: 12190590.5
(22) Anmeldetag: 30.10.2012
(51) Int. Cl.: A62C 2/06, A62C 3/16, F16L 5/04

(54) **Brandschutzmanschette**
Flame retardant sleeve
Manchette pare-feu

(30) Priorität: 22.12.2011 DE 102011089531
(43) Veröffentlichungstag der Anmeldung: 26.06.2013
(73) Patentinhaber: HILTI Aktiengesellschaft, 9494 Schaan (LI)
(72) Erfinder: Münzenberger, Herbert, 65191 Wiesbaden (DE); Drexl, Michael, 86938 Schondorf (DE)
(74) Vertreter: Hilti Aktiengesellschaft Corporate Intellectual Property

(56) Entgegenhaltungen:
- WO-A1-00/68608
- DE-A1- 2 947 593
- DE-A1-102010 010 210

## Beschreibung

Die Erfindung betrifft eine an einer Wand oder Decke montierbare Brandschutzmanschette zum Abschotten von durch Wände oder Decken hindurchführenden Leitungen mit einer intumeszierenden Brandschutz-Einlage, einem die Brandschutz-Einlage umgebenden Wandungsteil, an dessen Innenseite die Brandschutz-Einlage angeordnet ist, und wenigstens einem, im Bereich wenigstens einer Stirnseite des Wandungsteils radial nach außen abragendem Befestigungsteil.

Solche Brandschutzmanschetten sind in den verschiedensten Ausgestaltungen bekannt. Sie dienen dazu, im Brandfall Durchbrüche durch Wände, Decken oder Böden von Gebäuden zu verschließen, durch die brennbare oder schmelzende Rohre hindurchgeführt sind. Zu diesem Zweck wird die Brandschutzmanschette um die Rohre herum angeordnet, so dass bei einem Brand die sich dann ausdehnende Brandschutz-Einlage den Durchbruch möglichst dicht verschließt. Dabei ist die Brandschutzmanschette üblicherweise auf der Außenseite der Öffnung angeordnet, also beispielsweise an der Wand, durch die sich der Durchbruch hindurch erstreckt. Als Mantel für den Streifen aus Intumeszenzmaterial wird üblicherweise Blech verwendet. Mit einem solchen Mantel kann der im Brandfall erzeugte Blähdruck der Brandschutz-Einlage gut abgestützt werden, so dass gewährleistet ist, dass die Brandschutz-Einlage gerichtet dorthin expandiert, wo die Öffnung verschlossen werden soll.

Eine derartige Brandschutzmanschette ist in der WO 00/68608 A1 und der DE 102010010210 A1 beschrieben sowie in dem in den beiden Schriften zitierten Stand der Technik. Die WO 00/68608 A1 beschreibt eine Brandschutzmanschette zur nachträglichen Montage mit einem Mantel aus Blech, in dem ein Streifen aus intumeszierendem Material angeordnet ist, wobei die Brandschutzmanschette als fortlaufender Streifen ausgebildet ist. Die DE 102010010210 A1 beschreibt eine Brandschutzmanschette, umfassend ein Gehäuse mit einem Innenraum, sowie eine sich radial von dem Gehäuse erstreckende Anlageeinrichtung, die ein erstes Anlagemittel und mindestens ein zweites Anlagemittel aufweist, wobei die Anlagemittel radial unterschiedliche Ausdehnungen aufweisen.

Nachteilig bei den bekannten Konstruktionen ist, dass die Brandschutz-Einlage als wenige Millimeter dünner Streifen ausgebildet ist, der den vom Mantel aufspannenden Raum nicht vollständig ausfüllt, so dass bei gegebenem Manschettenumfang keine Flexibilität hinsichtlich des Umfangs der zu umschließenden Rohrleitungen gegeben ist. So ist ein bestimmter Manschettentyp nur für einen bestimmten Rohrdurchmesser geeignet und es kann, wenn der Durchmesser des zu umschließenden Rohres kleiner ist, als dies durch die Manschette vorgegeben ist, der Ringspalt zwischen dem Rohr und dem Durchbruch nicht rauchgasdicht abgeschlossen werden.

Insbesondere wäre bei der Verwendung der bekannten Brandschutzmanschetten für Leitungen, Kabel und dergleichen eine Nachbelegung mit weiteren Leitungen oder Kabeln nur durch einen Austausch der bereits montierten Manschette durch eine mit einem größeren Umfang realisierbar. Auch wäre durch die Manschette selbst, die gewöhnlich aus einem Blechmantel besteht, der Umfang der abzuschottenden Leitung(en) und Kabel nach unten begrenzt, damit können nicht beliebig kleine Umfänge von der Manschette umschlossen werden. Daher werden diese Brandschutzmanschetten nicht zur Abschottung einzelner Leitungen oder Kabel mit relativ geringem Durchmesser verwendet.

Da die Brandschutz-Einlage bei den bekannten Brandschutzmanschetten gewöhnlich wenig kompressibel sind, können Leitungsstränge, die etwa aus mehreren Kabeln bestehen, nicht rauchgasdicht abgeschottet werden, da die Zwickel zwischen den einzelnen Leitungen von der Brandschutz-Einlage nicht abgedichtet werden. Hierzu ist eine weiteren Maßnahme erforderlich, wie etwa die zusätzliche Abschottung der Bauteildurchführung beispielsweise mit einem Brandschutzschaum, einer Brandschutzmasse oder dergleichen.

Ferner ermöglichen die bekannten Brandschutzmanschetten bei sehr unstrukturierter Verlegung der Kabel keine Rauchgasdichtigkeit, da sie wenig flexibel sind und für die Abschottung von möglichst runden Rohren und Leitungssträngen bestimmter Durchmesser konzipiert sind.

In der Praxis werden Kabelstränge üblicherweise mit intumeszierenden Dichtstoffen, wie Brandschutzschäumen, Brandschutzmörteln oder anderen Dichtstoffen, abgeschottet, wobei der Spalt zwischen Kabelstrang und Bauteil mit den intumeszierenden Dichtstoffen gefüllt wird. Dabei ist nicht zuverlässig gewährleistet, dass die Einbauvorschriften entsprechend den Zulassungen der Brandschutzprodukte, wie maximale Kabelbelegung, Einbautiefe, maximaler Öffnungsquerschnitt und Wandabstände, eingehalten werden. Darüber hinaus ist das nachträgliche Abschotten von Kabeldurchführungen zeitaufwendig.

Die Aufgabe der Erfindung besteht nun darin, eine Brandschutzmanschette zu schaffen, die flexibler eingesetzt und vor Ort mit geringem Aufwand an die jeweils benötigten Leitungs- oder Kabeldurchmesser angepasst werden kann.

Zur Lösung dieser Aufgabe ist erfindungsgemäß vorgesehen, dass die intumeszierende Brandschutz-Einlage als ein den vom Gehäuse umspannten Raum vollständig ausfüllender, nachgiebig verformbarer Formkörper, bevorzugt ein zylinderförmiger Formkörper ausgebildet ist.

*"Nachgiebig verformbar"* im Sinne der Erfindung bedeutet dabei, dass das Material, aus dem die Brandschutz-Einlage besteht, so elastisch ist, dass ein Zusammendrücken problemlos, d.h. ohne großen Kraftaufwand, etwa mit einer Hand, möglich ist und die Brandschutz-Einlage wieder ihre ursprüngliche Form annehmen kann. Hierdurch wird gewährleistet, dass die Leitungen oder Kabel bündig umfasst und damit gegen Rauchgase abgedichtet werden. Insbesondere bei Kabelbündeln ist dies von Vorteil, da sich das Material der Brandschutz-Einlage in die Zwickel zwischen den äußeren nebeneinanderliegenden Kabeln drückt und diese ebenfalls abdichtet.

Der Formkörper besteht bevorzugt aus einem schäumbaren Bindemittel, das wenigstens ein aschebildendes und gegebenenfalls intumeszierendes Stoffgemisch enthält. Das Bindemittel dient dabei als verbundbildender Träger für das aschebildende und gegebenenfalls intumeszierende Stoffgemisch. Bevorzugt ist das Stoffgemisch homogen in dem Bindemittel verteilt. Der verbundbildenden Träger ist bevorzugt aus der Gruppe ausgewählt, bestehend aus Polyurethanen, Phenolharzen, Polystyrolen, Polyolefinen, wie Polyethylen und/oder Polybutylen, Melaminharzen, Melaminharzschäumen, synthetischem oder natürlichem Kautschuk, Cellulose, Elastomeren und Gemischen davon, wobei Polyurethane bevorzugt sind.

Das aschebildende und gegebenenfalls intumeszierende Stoffgemisch umfasst die üblichen und dem Fachmann bekannten Brandschutzadditive, welche im Brandfall, also unter Hitzeeinwirkung aufschäumen und dabei einen die Flammenausbreitung hindernden Schaum ausbilden, wie ein intumeszierendes Material auf der Grundlage eines Säurebildners, einer Kohlenstoff liefernden Verbindung und eines Gasbildners. Bevorzugt umfasst das intumeszierende Material als Säurebildner, ein Salz oder ein Ester einer anorganischen, nichtflüchtigen Säure ausgewählt aus Schwefelsäure, Phosphorsäure und Borsäure, als Kohlenstoff liefernde Verbindung eine Polyhydroxyverbindung und/oder ein thermoplastisches oder duroplastisches polymeres Harzbindemittel und als Gasbildner ein Chlorparaffin, Melamin, eine Melaminverbindung, insbesondere Melamincyanurat, Melaminphosphat, Melaminpolyphosphat, Tris(hydroxyethyl)-cyanurat, Cyanamid, Dicyanamid, Dicyandiamid, Biguanidin und/oder ein Guanidinsalz, insbesondere Guanidinphosphat oder Guanidinsulfat.

Der verbundbildende Träger kann ferner als ablatives Additiv, eine anorganische Verbindung, die Wasser, z.B. als Kristallwasser, fest eingelagert hat und bei Temperaturen bis 100°C nicht austrocknet, dieses aber im Brandfall ab 120°C freisetzt und dadurch temperaturführende Teile kühlen kann, enthalten, bevorzugt ein bei der Brandtemperatur bzw. bei Beflammung wasserabgebendes anorganisches Hydroxid oder Hydrat, insbesondere Aluminiumhydroxid, Aluminiumoxidhydrate oder teilhydratisierte Aluminiumhydroxide. Es kommen aber auch andere, bei der Beflammung wasserabgebende anorganische Hydroxide oder Hydrate in Betracht, wie sie in der EP 0 274 068 A2 beschrieben sind.

Derartige Verbindungen, die als Stoffgemisch in der erfindungsgemäßen Brandschutz-Einlage eingesetzt werden können, sind dem Fachmann bekannt und beispielsweise in den folgenden Druckschriften offenbart, auf die hiermit ausdrücklich Bezug genommen sei: DE 30 25 309 A1, DE 30 41 731 A1, DE 33 02 416 A1, DE 34 11 327 A1, EP 0 043 952 B1, EP 0 051 106 B1, EP 0 061 024 B1, EP 0 116 846 B1, EP 0 158 165 B1, EP 0 274 068 A2, EP 1 347 549 A1, EP 1 641 895 B1 und DE 196 53 503 A1.

Die Herstellung des Formkörpers erfolgt durch Formschäumen, wie Reaktionsschäumen (RIM), entsprechend der DE 3917518, z.B. mit Fomox®-Brandschutzschaum oder der Dämmschicht bildende Baustoff HILTI CP 65GN. Materialien, die für erfindungsgemäße Zwecke eingesetzt werden können, sind aus EP 0061024 A1, EP 0051106 A1, EP 0043952 A1, EP 0158165 A1, EP 0116846 A1 und US 3,396,129 A sowie EP 1347549 A1 bekannt. Bevorzugt besteht der Formkörper aus einem intumeszenzfähigen Polyurethanschaum, wie er aus der EP 0061024 A1, DE 3025309 A1, DE 3041731 A1, DE 3302416 A und DE 3411 327 A1 bekannt ist.

Aufgrund der Konsistenz dieses Schaumstoffs ist es möglich, Wanddurchbrüche unmittelbar nach Herstellung der Wände feuer- und rauchgasdicht zu verschließen und erst während der Installation in den Formkörper der Brandschutz-Einlage einen oder mehrere Durchgangsöffnungen einzuschneiden, deren Durchmesser an die der hindurchzuführenden Leitungen und Kabel genau angepasst ist. Die Nachgiebigkeit des Formkörper-Materials ermöglicht auch die genau bündige Lage des Formkörpers an die Leitungen oder Kabel, und kann die Zwickel zwischen Leitungs- oder Kabelbündeln abdichten. Ferner kann der Formkörper zur Abschottung von bereits verlegten Leitungen und Kabeln einfach eingeschnitten werden, ohne dass dessen Rauchgasdichtigkeit beeinträchtigt wird.

Die Form des Formkörpers ist an die Form der Brandschutzmanschette angepasst und ist zweckmäßig zylinderförmig. Die Höhe des zylinderförmigen Formkörpers ist dabei wiederum an die Breite des Wandungsteils der Brandschutzmanschette angepasst und entspricht zweckmäßig dieser Breite. Der Durchmesser des Formkörpers entspricht dabei mindestens dem Innendurchmesser der durch die Manschette im montierten Zustand aufgespannten Raum definiert wird, wobei er geringfügig größer sein kann, um einen festen Halt der Brandschutz-Einlage in der Brandschutzmanschette zu gewährleisten.

In einer bevorzugten Ausführungsform der Erfindung ist der Formkörper der Brandschutz-Einlage so dimensioniert, dass die Höhe des Formkörpers größer ist als die Breite des Wandungsteils der Brandschutzmanschette, so dass der Formkörper über das Wandungsteil hinaussteht. Zweckmäßig steht dabei der Formkörper nur auf der der Wand oder Decke zugewandten Seite über das Wandungsteil hinaus. Bevorzugt sind dabei an dem Wandungsteil nur an der Umfangslinie (Außenkante) des Wandungsteils Laschen vorgesehen, welche der Wand oder der Decke gegenüberliegend ist. Damit wird die Brandschutz-Einlage vor dem Herausziehen oder Herausrutschen gesichert. In montierten Zustand wird durch die Laschen zum einen gewährleistet, dass im Brandfall die Intumeszenz der Brandschutz-Einlage in Richtung der Bauteilöffnung gerichtet wird, und zum anderen, dass die Brandschutz-Einlage effektiv an die Wand oder Decke gedrückt werden kann.

In einer alternativen Ausführungsform weist der Formkörper an der der Wand oder Decke zugewandten Grundfläche einen rechtwinklig zum Formkörper verlaufenden Flansch auf. Alternativ kann der Flansch durch eine in Umfangsrichtung des Formkörpers verlaufende Einkerbung gebildet sein, so dass der Umfang des Flansches wenigstens dem Umfang des Formkörpers entspricht. Zweckmäßig ist der Flansch so angeordnet, dass er das äußerste Teil der Wand oder Decke zugewandten Seite der Brandschutzmanschette bildet. Hierdurch kann ein rauchgasdichter Anschluss der Brandschutzmanschette an der Mauerdurchführung erreicht werden, in dem der Flansch als Dichtung fungiert. Daher ist keine zusätzliche Abdichtung des zwischen der Wand oder Decke und dem Kabelstrang verbliebenen Spaltes mit Dichtmasse mehr notwendig. Dies hat den Vorteil, dass der Umfang der Manschette lediglich an die Größe des Wand- oder Deckendurchbruchs angepasst werden muss, wobei der Anwender bei der Belegung des Durchbruchs weitestgehend flexibel ist. Auch bei unvollständiger Belegung des Durchbruchs mit Leitungen oder Kabeln, muss der verbleibende, offene Spalt nicht mit einem zusätzlichen Brandschutzmaterial, wie etwa ein Schaum und dergleichen, abgedichtet werden, da über den Flansch und das Formkörpermaterial eine ausreichende Rauchgasdichtigkeit gegeben ist.

Bei beiden Ausführungsformen entspricht der Umfang des Flansches bevorzugt mindestens dem Außenumfang des Wandungsteils. Hierdurch wird eine bessere Rauchgasdichtigkeit erreicht, da der Flansch über das Wandungsteil an die Wand oder Decke gepresst wird.

Der Flansch darf dabei nicht so dick sein, dass der Abstand zwischen der Manschette, also dem Wandungsteil und dem Befestigungsteil, und der Wand oder Decke so groß wird, dass keine sichere Montage der Brandschutzmanschette mehr möglich ist. Sie ist daher so zu wählen, dass die Brandschutzmanschette die Bauteilöffnung abdichtet und problemlos an der Wand oder Decke montiert werden kann.

Ein weiterer Vorteil des Flansches liegt darin, dass intumeszierendes Material direkt auf der Wand oder Decke zum Liegen kommt und somit die Intumeszenz im Brandfall auch in Richtung der Wand- oder Deckendurchführung und nicht nur radial nach innen in Richtung der Leitung oder der Kabel gerichtet wird, was eine zusätzliche Dichtigkeit bewirkt.

Um die Ausdehnung der Brandschutz-Einlage im Brandfall in axialer Richtung weg von der Leitungsdurchführung möglichst zu begrenzen und die Intumeszenz radial nach innen in Richtung der Leitungen oder Kabel zu lenken, sind entlang wenigstens einer Umfangslinie am Umfang des Wandungsteils mehrere radial nach innen abragende Laschen angeordnet und zwar insbesondere wenigstens entlang der Umfanngslinie am Umfang des Wandungsteils, welche der Wand- oder Deckenseite entgegengesetzt ist. Hierdurch wird außerdem ein Herausrutschen des Formkörpers verhindert, wenn über die durchgeführte Leitung oder das durchgeführte Kabel Zug auf den Formkörper ausgeübt wird.

In einer bevorzugten Ausführungsform sind die Laschen sowohl an der Umfangslinie des Wandungsteils, welche der Wand oder Decke zugewandt ist, als auch an der Umfangslinie des Wandungsteils, welche der Wand oder Decke abgewandt ist, angeordnet. Von Vorteil ist insbesondere, wenn die mehreren radial nach innen ragenden Laschen an der Umfangslinie, welche der Wand oder Decke zugewandt ist, von dem Flansch der Brandschutz-Einlage umfasst werden. Besonders vorteilhaft wirken der durch die Einkerbung gebildete Flansch und die Laschen zusammen, wenn die Laschen in die den Flansch bildende Einkerbung des Formkörpers eingreifen. Hierdurch sitzt der Formkörper sehr fest in der Manschette und es kann ein zusätzlicher Druck auf den Flansch ausgeübt werden. Darüber hinaus wird durch das Umfassen der Laschen durch den Formkörper verhindert, dass der Flansch umgebogen wird und so nicht richtig an der Wand oder Decke zum Anliegen kommt.

Zur Montage der erfindungsgemäßen Brandschutzmanschette wird zunächst das Wandungsteil entsprechend der Größe der Brandschutz-Einlage abgelängt bzw. gewählt und um die Brandschutz-Einlage gelegt. Die Größe, bzw. der Umfang des Brandschutzteils ist mindestens so groß zu wählen, dass die abzuschottenden Leitungen oder Kabel nicht mehr als 60 % der Grundfläche der Brandschutz-Einlage ausmachen. Eine Überdimensionierung, d.h. ein größerer Umfang der Brandschutzeinlage ist dabei unkritisch und dann von Vorteil, wenn beabsichtigt ist, das Schott durch nachträgliches Durchführen weiterer Leitungen und/oder Kabel zu erweitern, da dann keine neue Brandschutzmanschette montiert werden muss sondern die bestehende in einfacher Weise angepasst werden kann. Dann wird, bei Montage der Brandschutzmanschette nach der Belegung der Wand- oder Deckendurchführung mit Leitungen oder Kabeln, die Brandschutzeinlage eingeschnitten und gerade so viel Material der Brandschutzeinlage, vorzugsweise aus dem mittleren Bereich, herausgeschnitten, dass sich die Brandschutz-Einlage beim Anlegen der Manschette um die Leitungen oder Kabel mit einem leichten Druck an die Leitungen oder Kabel anpressen lassen. Hierdurch wird die Rauchgasdichtigkeit sichergestellt. Die so hergerichtete Brandschutzmanschette wird über übliche Befestigungsteile, etwa Haken, die in das Wandungsteil eingreifen können und eine Öffnung für das Befestigungsmittel, wie eine Schraube, aufweisen, so an der Wand oder Decke montiert, dass die Brandschutzeinlage an die Oberfläche der Wand oder Decke gepresst wird und alle Spalte abdichtet.

Die Erfindung wird anhand von bevorzugten Ausführungsbeispielen näher beschrieben. Es zeigen:
- FIG. 1: eine schematische Ansicht der Brandschutz-Einlage gemäß einer ersten Ausführungsform der Erfindung;
- FIG. 2: eine schematische Ansicht der Brandschutz-Einlage gemäß einer weiteren Ausführungsform der Erfindung;
- FIG.3: eine schematische Ansicht (Draufsicht) einer erfindungsgemäßen Brandschutzmanschette mit der Brandschutzeinlage aus FIG. 2;
- FIG. 4: eine schematische Ansicht (von unten) der Brandschutzmanschette aus FIG. 3.

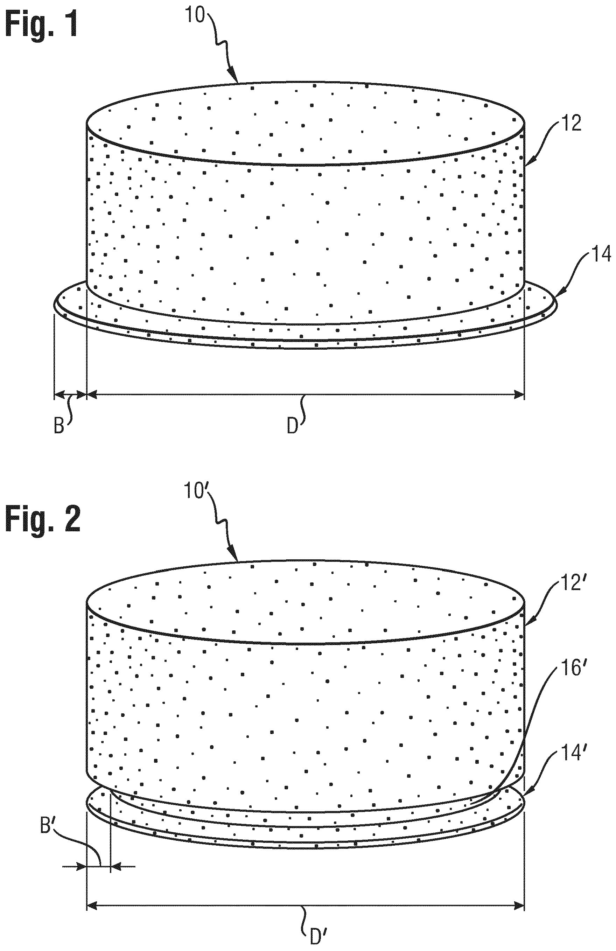

FIG. 1 zeigt eine schematische Ansicht einer Brandschutz-Einlage 10 gemäß einer ersten Ausführungsform der Erfindung. Die Brandschutz-Einlage 10 besteht aus einem Formkörper 12, der als Vollzylinder ausgebildet ist und einen Flansch 14 aufweist, der um die Breite B über den Durchmesser D des Vollzylinders hinausragt. Dieser Flansch 14 ragt radial nach außen ab und bildet den Teil der Brandschutzmanschette, der mit seiner Flachseite direkt an der Wand oder Decke anliegt.

Die Brandschutz-Einlage 10 besteht in dem gezeigten Beispiel aus geschäumten Polyurethan mit darin homogen verteilten Brandschutzadditiven und ist einstückig ausgebildet, d.h. der Formkörper 12 und die Manschette 14 sind in einem Stück durch Reaktionsschäumen (RIM) hergestellt.

FIG. 2 zeigt eine schematische Ansicht einer Brandschutzeinlage 10' gemäß einer zweiten Ausführungsform der Erfindung. Die Brandschutz-Einlage 10' besteht bei dieser Ausführungsform aus einem Formkörper 12', der ebenfalls als Vollzylinder ausgebildet ist und einen Flansch 14' aufweist, dessen Breite B' dem Durchmesser D' des Vollzylinders entspricht. Der Flansch 14' wird dabei durch eine im Umfangsrichtung entlang des gesamten Umfangs des Formkörpers 14' verlaufende Einkerbung 16' gebildet.

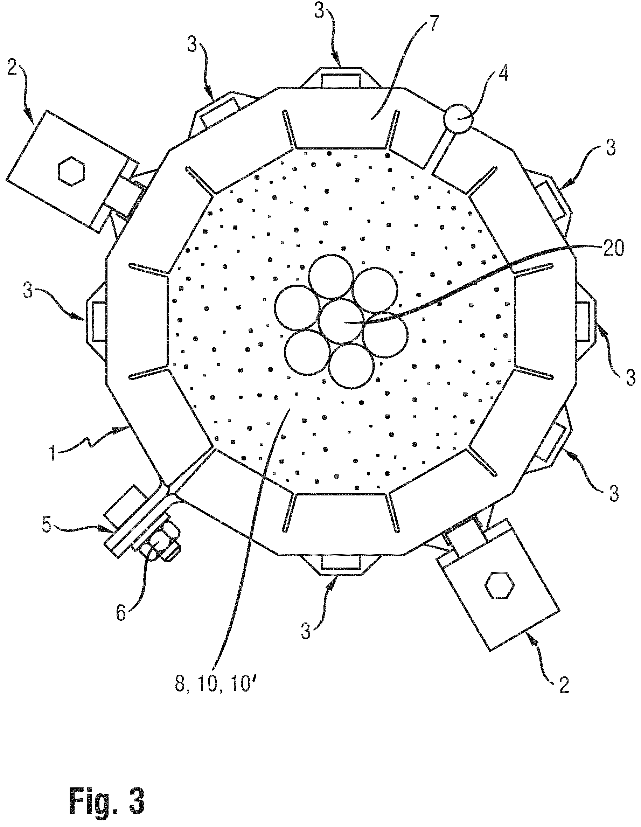

Die in FIG. 3 in Draufsicht dargestellte Brandschutzmanschette weist ein Wandungsteil 1 mit zwei halbschalenartig ausgebildeten Elementen auf, die über eine gemeinsame Schwenkachse 4 gegeneinander schwenkbar sind. Die Endbereiche des Wandungsteiles 1, die der Schwenkachse 4 gegenüberliegen, sind gebildet von einem radial abragenden Verschluss 5, der dem Verspannen des Wandungsteiles 1 dient. Die Verspannung erfolgt mittels wenigstens einer Klemmschraube 6.

Das Wandungsteil 1 besteht aus einem Blechprofil an dem mehrere radial nach innen abragende Laschen 7 entlang wenigstens einer Umfangslinie am Umfang des Wandungsteils 1 angeordnet sind, um eine im Wesentlichen kreisrunde Form zu bilden. An den Stirnseiten des Wandungsteils 1 erstrecken sich zwei radial nach außen abragende Befestigungsteile 2. Die Laschen 7 gestatten die Aufnahme und die Führung einer Einlage 10, 10' mit brandhemmenden Eigenschaften.

Das Wandungsteil 1 besitzt am Umfang mehrere gleichmäßig verteilt angeordnete, im Wesentlichen radial abstehende Laschen 3, die in Verbindung mit wenigstens einem Befestigungsteil 2 der Festlegung der Rohrmanschette an der Oberfläche der Wand oder Decke dienen. Die dargestellte Rohrmanschette umschließt einen Leitungsstrang 20, der aus 7 Einzelsträngen besteht und der durch einen Öffnung in einem Bauteil verlegt ist.

Alternativ (nicht dargestellt) kann die Manschette aus einem abgelängten Stück eines Endlosbandes bestehen. Allgemein kann die Manschette jede bekannte und für die bestimmten Zwecke verwendbare Manschette sein.

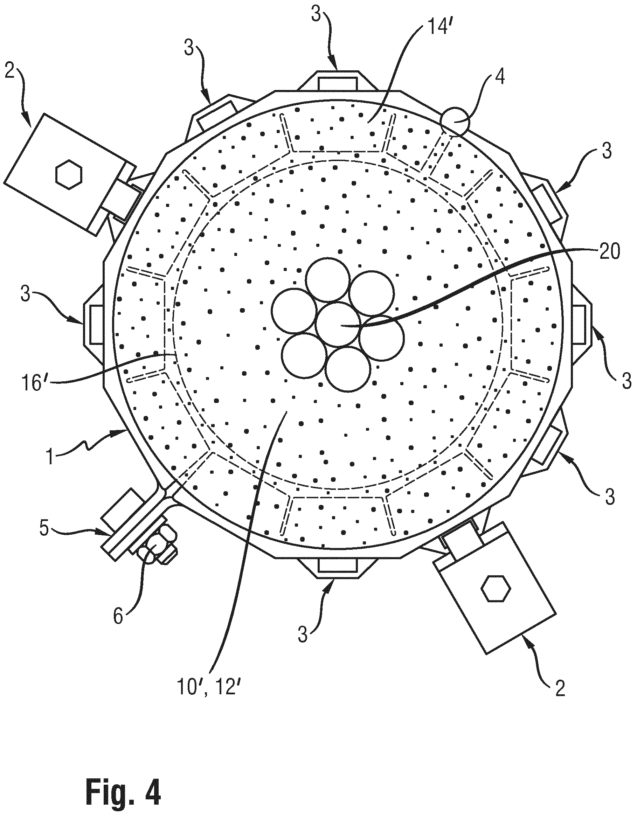

In FIG. 4 ist die in FIG. 3 dargestellte Brandschutzmanschette von unten gezeigt. Hieraus wird ersichtlich, dass der Flansch 14' des Formkörpers 12' der Brandschutz-Einlage 10' über den Laschen liegt. Die Laschen greifen in die den Flansch 14' bildende Einkerbung 16' des Formkörpers 12' ein.

## Patentansprüche

1. Brandschutzmanschette zum Abschotten von durch Wände oder Decken hindurchführenden Leitungen und/oder Kabel mit einer intumeszierenden Brandschutz-Einlage (10, 10'), einem die Brandschutz-Einlage (10, 10') umgebenden Wandungsteil (1), an dessen Innenseite die Brandschutz-Einlage (10, 10') angeordnet ist, und wenigstens einem, im Bereich wenigstens einer Stirnseite des Wandungsteils (1) radial nach außen abragendem Befestigungsteil (2), **dadurch gekennzeichnet, dass** die intumeszierende Brandschutz-Einlage (10, 10') als ein den vom Wandungsteil (1) umspannten Raum (8) vollständig ausfüllender, nachgiebig verformbarer Formkörper (12, 12') ausgebildet ist.

2. Brandschutzmanschette nach Anspruch 1, **dadurch gekennzeichnet, dass** der Formkörper (12, 12') zylinderförmig ausgebildet ist.

3. Brandschutzmanschette nach Anspruch 1 oder 2, **dadurch gekennzeichnet, dass** mehrere radial nach innen abragende Laschen (7) entlang wenigstens einer Umfangslinie am Umfang des Wandungsteils (2) angeordnet sind.

4. Brandschutzmanschette nach Anspruch 3, **dadurch gekennzeichnet, dass** die mehreren radial nach innen abragenden Laschen (7) wenigstens entlang der Umfangslinie am Umfang des Wandungsteils (1) angeordnet sind, welche der Wand oder Decke zugewandt ist.

5. Brandschutzmanschette nach einem der Ansprüche 1 bis 4, **dadurch gekennzeichnet, dass** die Höhe des Formkörpers (12) größer ist als die Breite des Wandungsteils (1), so dass der Formkörper über das Wandungsteil (1) hinaussteht.

6. Brandschutzmanschette nach einem der Ansprüche 1 bis 4, **dadurch gekennzeichnet, dass** der Formkörper (12) an der der Wand oder Decke zugewandten Grundfläche einen rechtwinklig zum Formkörper (12) verlaufenden Flansch (14) aufweist.

7. Brandschutzmanschette nach einem der Ansprüche 1 bis 4, **dadurch gekennzeichnet, dass** der Formkörper (12') an der der Wand oder Decke zugewandten Grundfläche einen Flansch (14') aufweist, wobei der Flansch (14') durch eine in Umfangsrichtung des Formkörpers (12') verlaufende Einkerbung (16') gebildet wird, so dass der Durchmesser (D') des Flansches (14') wenigstens dem Durchmesser des Formkörpers entspricht.

8. Brandschutzmanschette nach Anspruch 6 oder 7, **dadurch gekennzeichnet, dass** der Durchmesser des Flansches (14, 14') mindestens dem Außendurchmesser des Wandungsteils (1) entspricht.

9. Brandschutzmanschette nach einem der Ansprüche 6 bis 8, **dadurch gekennzeichnet, dass** die Dicke des Flansches (14, 14') so gewählt wird, dass die Brandschutzmanschette problemlos an der Wand oder Decke montiert werden kann.

10. Brandschutzmanschette nach Anspruch 4 und nach wenigstens einem der Ansprüche 7 bis 9, **dadurch gekennzeichnet, dass** die mehreren radial nach innen ragenden Laschen in die den Flansch (14') bildende Einkerbung (16') des Formkörpers (12') eingreifen.

## Claims

1. A fire protection sleeve for the sealing of pipelines and/or cables passing through walls or ceilings, said fire protection sleeve comprising an intumescent fire protection insert (10, 10'); a wall component (1) which surrounds the fire protection insert (10, 10') with the fire-protection insert (10, 10') being disposed on the inside; and at least one fastening component (2) projecting radially outwards in the region of at least one end face of the wall component (1), **characterized in that** the intumescent fire protection insert (10, 10') takes the form of an elastically deformable moulded body (12, 12') which completely fills the space (8) enclosed by the wall component (1).

2. A fire protection sleeve according to Claim 1, **characterized in that** the moulded body (12, 12') is cylindrical in form.

3. A fire protection sleeve according to Claim 1 or 2, **characterized in that** a number of tabs (7) projecting radially inwards are disposed along at least one circumferential line around the periphery of the wall component (1).

4. A fire protection sleeve according to Claim 3, **characterized in that** the radially inward-projecting tabs (7) are disposed around the periphery of the wall component (1) at least along the circumferential line facing the wall or ceiling.

5. A fire protection sleeve according to one of Claims 1 to 4, **characterized in that** the height of the moulded body (12) is greater than the width of the wall component (1) so that the moulded body extends beyond the wall component (1).

6. A fire protection sleeve according to one of Claims 1 to 4, **characterized in that**, on the surface facing the wall or ceiling, the moulded body (12) has a flange (14) extending at right angles to said moulded body (12).

7. A fire protection sleeve according to one of Claims 1 to 4, **characterized in that**, on the surface facing the wall or ceiling, the moulded body (12') has a flange (14'), wherein the flange (14') takes the form of a notch (16') which extends in circumferential direction of the moulded body (12') so that the diameter (D') of the flange (14') is at least equal to the diameter of the moulded body.

8. A fire protection sleeve according to Claim 6 or 7, **characterized in that** the diameter of the flange (14, 14') is at least equal to the outer diameter of the wall component (1).

9. A fire protection sleeve according to one of Claims 6 to 8, **characterized in that** the thickness of the flange (14, 14') is such that the fire protection sleeve can easily be mounted on the wall or ceiling.

10. A fire protection sleeve according to Claim 4 and according to at least one of Claims 7 to 9, **characterized in that** the radially inward-projecting tabs engage in the notch (16') made in the moulded body to form the flange (14').

## Revendications

1. Manchette pare-feu destinée à cloisonner des conduites et/ou des câbles traversant des murs ou des plafonds, comportant un insert pare-feu intumescent (10, 10'), une partie de paroi (1) entourant l'insert pare-feu (10, 10'), sur le côté intérieur de laquelle est agencé l'insert pare-feu (10, 10'), et au moins une partie de fixation (2) faisant radialement saillie vers l'extérieur dans la zone d'au moins une face avant de la partie de paroi (1), **caractérisée en ce que** l'insert pare-feu intumescent (10, 10') est mis en oeuvre sous la forme d'un corps moulé (12, 12') déformable de manière souple et remplissant entièrement l'espace (8) couvert par la partie de paroi (1).

2. Manchette pare-feu selon la revendication 1, **caractérisée en ce que** le corps moulé (12, 12') est mis en oeuvre sous la forme d'un cylindre.

3. Manchette pare-feu selon la revendication 1 ou 2, **caractérisée en ce que** plusieurs languettes (7) faisant radialement saillie vers l'intérieur sont agencées le long d'au moins une ligne circonférentielle sur la circonférence de la partie de paroi (2).

4. Manchette pare-feu selon la revendication 3, **caractérisée en ce que** la pluralité de languettes (7) faisant radialement saillie vers l'intérieur est agencée au moins le long de la ligne circonférentielle sur la circonférence de la partie de paroi (1), laquelle ligne circonférentielle est dirigée vers le mur ou le plafond.

5. Manchette pare-feu selon l'une des revendications 1 à 4, **caractérisée en ce que** la hauteur du corps moulé (12) est plus grande que la largeur de la partie de paroi (1), de telle sorte que le corps moulé fait saillie au-delà de la partie de paroi (1).

6. Manchette pare-feu selon l'une des revendications 1 à 4, **caractérisée en ce que** le corps moulé (12) comporte, sur la surface de base dirigée vers le mur ou le plafond, une bride (14) s'étendant perpendiculairement au corps moulé (12).

7. Manchette pare-feu selon l'une des revendications 1 à 4, **caractérisée en ce que** le corps moulé (12') comporte, sur la surface de base dirigée vers le mur ou le plafond, une bride (14'), dans laquelle la bride (14') est formée par un entaillage (16') s'étendant dans une direction circonférentielle du corps moulé (12'), de telle sorte que le diamètre (D') de la bride (14') correspond au moins au diamètre du corps moulé.

8. Manchette pare-feu selon la revendication 6 ou 7, **caractérisée en ce que** le diamètre de la bride (14, 14') correspond au moins au diamètre extérieur de la partie de paroi (1).

9. Manchette pare-feu selon l'une des revendications 6 à 8, **caractérisée en ce que** l'épaisseur de la bride (14, 14') est choisie de telle sorte que la manchette pare-feu peut être facilement montée sur le mur ou au plafond.

10. Manchette pare-feu selon la revendication 4 ou selon au moins une des revendications 7 à 9, **caractérisée en ce que** la pluralité de languettes faisant radialement saillie vers l'intérieur s'engage dans l'entaillage (16') formant la bride (14') du corps moulé (12').
